# EUROPÄISCHE PATENTANMELDUNG

(11) **EP 0 669 664 A1**
(43) Veröffentlichungstag der Anmeldung: **30.08.1995**
(21) Anmeldenummer: 95101953.8
(22) Anmeldetag: 14.02.1995
(51) Int. Cl.: H01M 2/34, H01R 11/28

(54) **Batterie mit Codierung der Anschlusspole**

(30) Priorität: 21.02.1994 DE 4405886
(71) Anmelder: HAGEN Batterie AG, D-59494 Soest (DE)
(72) Erfinder: Gürtler, Josef, Dr., D-59505 Bad-Sassendorf-Weslarn (DE); Wulf, Ulrich, D-59494 Soest (DE); Scholz, Detlef, D-59494 Soest (DE)
(74) Vertreter: Lange, Gerd, Dipl.-Ing.

(57) **Zusammenfassung**

Die Erfindung betrifft eine Batterie, insbesondere Fahrzeugbatterie mit Anschlußpolen, die in einer Polnische im Batteriedeckel positioniert sind. Es wird vorgeschlagen, die Anschlußpole identisch auszuführen und durch unterschiedliche Positionsabstände zur jeweils benachbarten Polnischenwand zu codieren, wodurch die Fertigungskosten für die Anschlußpole reduziert und dennoch der polaritätsrichtige Anschluß der Kabelverbinder gewährleistet ist.

## Beschreibung

Die Erfindung betrifft eine Batterie, insbesondere eine Fahrzeugbatterie, z.B. eine Starterbatterie, deren Anschlußpole in einer Polnische im Batteriedeckel positioniert sind. Derartige Polnischen definieren mit ihren Polnischenwandungen den Anschlußraum für die jeweiligen Kabelverbinder der Plusleitung und der Minusleitung und schützen zugleich die Pole der Batterie vor unerwünschten mechanischen Belastungen, da die Polnischenwandungen üblicherweise eine vertikale Höhe haben, die das vertikal freistehende Ende der durch den Batteriedeckel hindurchgeführten Anschlußpole überragt.

Die Anschlußpole selbst sind bei einer Batterie der beanspruchten Gattung als Schraubpole ausgeführt, jeweils mit einem durch den Batteriedeckel hindurchgeführten Polschaft und mit einer zur Achse des Polschaftes koaxialen Polanschlußbohrung (z.B. HAGEN-Patentpol) oder mit einer zur Achse des Polschaftes achsparallelen Polanschlußbohrung, die dann in einem an dem Polschaft befestigten Polquerstück vorhanden ist (sogenannter Winkelschraubpol), wobei in die jeweiligen Polanschlußbohrungen eine Polschraube zum Anschrauben des Kabelschuhs eines Kabelverbinders einsetzbar ist, die z.B. als durchsteckbare Bolzenschraube mit Gegenmutter oder z.B. als einfache Gewindeschraube ausgeführt sein kann für den Fall, daß die jeweilige Polanschlußbohrung ein Gewinde aufweist.

Beim Anschließen der Kabelverbinder an die Anschlußpole der Batterie gilt es zu verhindern, daß die Plus- und Minusleitungen polvertauscht an die Anschlußpole angeschlossen werden. Zu diesem Zweck ist es bekannt, die Anschlußpole und die jeweils zugeordneten Kabelschuhe der Kabelverbinder für verschiedene Polaritäten verschieden auszubilden. Fertigungstechnisch ist das insbesondere für die Batterieherstellung ein erheblicher Aufwand, da formverschiedene Anschlußpole immer einen zusätzlichen Aufwand z.B. bei der Fertigungsendkontrolle und bei der Bevorratung für die Serienfertigung der Batterien verursachen.

Aufgabe der Erfindung ist es daher, eine Batterie der gattungsgemäßen Art zu schaffen sowie auch dafür verwendbare einfache Kabelverbinder vorzuschlagen, die den Aufwand bei der Herstellung und Montage der Batterieanschlußpole erheblich verringern und - wie bisher schon gefordert - eine Polvertauschung beim Anschließen der Kabelverbinder an die Anschlußpole der Batterie ausschließen.

Diese Aufgabe wird erfindungsgemäß dadurch gelöst, daß die Schraubpole für den Pluspol und den Minuspol der Batterie identisch ausgebildet sind und daß die Polschäfte des Pluspols und des Minuspols derart in ihren jeweiligen Polnischen positioniert sind, daß die Positionsabstände der Polanschlußbohrungen zu der jeweils benachbarten Polnischenwand bei dem Pluspol und dem Minuspol unterschiedlich groß sind.

Die Lehre der Erfindung zeigt, daß die Polnischen in den Batteriedeckeln, die üblicherweise aus einem Isolierstoff gebildet sind und die mit ihren Polnischenwandungen den Anschlußraum für die Kabelverbinder definieren, dafür benutzt werden können, in Verbindung mit den relativ problemlos zu verändernden Positionsabständen der Polanschlußbohrungen zu der jeweils benachbarten Polnischenwand eine Codierung der Polarität der Anschlußpole zu schaffen, die praktisch kostenlos zur Verfügung steht. Es muß lediglich bei der Serienfertigung der Batteriedeckel, in die die Anschlußpole üblicherweise eingespritzt werden, ein unterschiedlicher Positionsabstand für den Pluspol und für den Minuspol gewählt werden. Bei den heutigen modernen Serienfertigungsmaschinen ist ein solcher unterschiedlicher Positionsabstand bei ansonsten völlig identisch ausgebildeten Anschlußpolen sehr einfach und problemlos einzurichten.

Die Positionsabstände der Polanschlußbohrungen zu der jeweils benachbarten Polnischenwand sind bei Winkelschraubpolen sehr einfach durch eine winkelverdrehte Montage bzw. Einspritzung der Polschäfte in den Batteriedeckel zu wählen. Davon bleibt die Satzgeometrie der in die Batteriezellen eingebauten Plattensätze völlig unbeeinflußt.

Ebenso können unterschiedliche Positionsabstände der Polanschlußbohrungen zu der jeweils benachbarten Polnischenwand auch durch eine leicht achsversetzte Montage der Polschäfte realisisert werden, was innerhalb gewisser möglicher Toleranzen ebenfalls die Satzgeometrie der in die Batteriezellen eingebauten Plattensätze unberührt läßt. Ein solcher achsversetzter Einbau ist sowohl bei den genannten Patentpolen der Anmelderin als auch bei Winkelschraubpolen möglich.

Letztlich können die unterschiedlichen Positionsabstände bei allen genannten Polarten auch durch eine unterschiedliche Ausbildung der jeweils benachbarten Polnischenwandung des Batteriedekkels realisiert werden.

Die nach der Lehre der Erfindung gegebenen unterschiedlichen Positionsabstände der Polanschlußbohrungen sind de facto eine unterschiedliche Codierung des Pluspols und des Minuspols einer Batterie. Diese Codierung ist in der Praxis in Kombination mit sehr einfachen Kabelverbindern von großem Vorteil.

Gemäß Anspruch 2 ist vorgesehen, die erfindungsgemäße Codierung der Anschlußpole einer Batterie zu kombinieren mit Kabelverbindern, deren Kabelschuhe im angeschraubten Zustand eine Quererstreckung quer zur Achse der Polanschlußbohrungen haben, die die folgenden beiden Bedingungen erfüllen. Zum einen sollen die Kabelschuhe für den Pluspol und für den Minuspol jeweils eine Quererstreckung haben, die gleich oder kleiner ist als der beschriebene Positionsabstand des jeweils zugeordneten Pols gleicher Polarität. Zum anderen soll jedoch der Kabelschuh mit der größeren Quererstreckung auch derart bemessen sein, daß seine Quererstreckung größer ist als der Positionsabstand des Pols der anderen Polarität.

Werden diese Bedingungen bei den jeweiligen Kabelschuhen für den Pluspol und für den Minuspol eingehalten, dann ist gewährleistet, daß beide Kabelverbinder im angeschraubten Zustand nur immer auf den jeweils richtigen zugeordneten Anschlußpolen montiert sein können.

Nachfolgend wird ein Ausführungsbeispiel der Erfindung anhand der Zeichnung näher beschrieben.

Es zeigt:

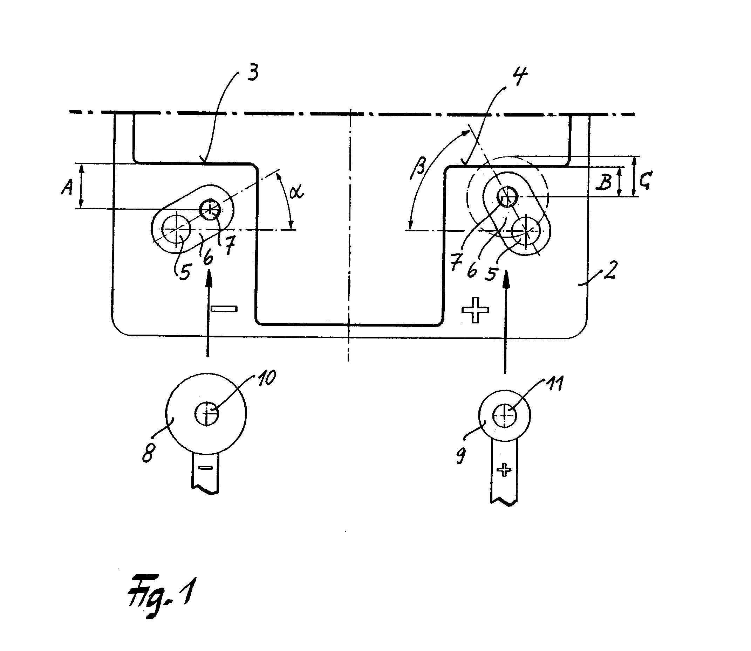

Fig. 1 die Draufsicht auf die eine Hälfte eines Batteriedeckels mit zwei Anschlußpolen.

Dargestellt ist in Fig. 1 die Draufsicht auf den Batteriedeckel 2, der aus einem elektrisch isolierenden Kunststoff gefertigt ist und in Richtung der Draufsicht durch entsprechende Erhöhungen und Vertiefungen die bekannten Polnischen bildet, von denen die eine die Polnischenwand 3 und die andere die Polnischenwand 4 aufweist.

In jeder Polnische ist ein Winkelschraubpol positioniert, jeweils bestehend aus einem durch den Batteriedeckel hindurchgeführten Polschaft 5 mit einem daran befestigten Querstück 6, das die Polanschlußbohrung 7 aufweist. Beide Winkelschraubpole sind identisch ausgeführt.

Jedoch ist der auf der linken Seite dargestellte Winkelschraubpol (Minuspol) mit einem Anstellwinkel a zur kantenparallelen Bezugslinie eingebaut, wohingegen der auf der rechten Seite vorhandene Winkelschraubpol (Pluspol) im Vergleich zu dem Minuspol winkelverdreht montiert ist, so daß er gegen die kantenparallele Bezugslinie den Anstellwinkel β einschließt.

Daraus resultiert, daß der Minuspol einen Positionsabstand A der Polanschlußbohrung 7 zu seiner benachbarten Polnischenwand 3 hat, und der Pluspol einen entsprechenden Positionsabstand B von seiner ihm benachbarten Polnischenwand 4.

Beide Positionsabstände A und B sind unterschiedlich groß und passen nur zum Anschrauben der entsprechend bemessenen flachen Kabelschuhe 8 und 9 des negativen bzw. positiven Kabelverbinders, die zu diesem Zweck eine mittige Anschraubbohrung 10 bzw. 11 für das Hindurchziehen der jeweiligen Polschraube (nicht dargestellt) haben.

Erkennbar ist, daß der Kabelschuh 8 des negativen Kabelverbinders, der im Vergleich zum Kabelschuh des positiven Kabelverbinders die größere Quererstreckung hat, derart bemessen ist, daß seine Quererstreckung C größer ist als der Positionsabstand B des Pluspols von der dort benachbarten Polnischenwand 4. Dementsprechend ist es unmöglich, daß der Kabelschuh 8 des negativen Kabelverbinders an dem Pluspol angeschlossen wird.

## Patentansprüche

1. Batterie, insbesondere Fahrzeugbatterie,
- deren Anschlußpole in einer Polnische im Batteriedeckel positioniert sind
- und die als Schraubpole ausgeführt sind, jeweils mit einem durch den Batteriedekkel hindurchgeführten Polschaft und mit einer zur Achse des Polschaftes koaxialen Pol anschlußbohrung oder mit einer zur Achse des Polschaftes achsparallelen Polanschlußbohrung, in die eine Polschraube zum Anschrauben des Kabelschuhs eines Kabelverbinders einsetzbar ist,
dadurch gekennzeichnet,
- daß die Schraubpole für den Pluspol und den Minuspol der Batterie identisch ausgebildet sind
- und daß die Polschäfte (5) des Pluspols und des Minuspols derart in ihren jeweiligen Polnischen positioniert sind, daß die Positionsabstände (A, B) der Polanschlußbohrungen (7) zu der jeweils benachbarten Polnischenwand (3, 4) bei dem Pluspol und dem Minuspol unterschiedlich groß sind.

2. Batterie nach Anspruch 1
in Kombination mit
- je einem Kabelschuh (8, 9) für den Pluspol und den Minuspol, deren Quererstreckungen zur Achse der Polanschlußbohrung (7) im angeschraubten Zustand jeweils gleich oder kleiner sind als die vorgenannten Positionsabstände (A, B) der jeweils zugeordneten Pole gleicher Polarität,
- wobei jedoch der Kabelschuh (8) mit der größeren Quererstreckung derart bemessen ist, daß seine Quererstreckung (C) größer ist als der Positionsabstand (B) des Pols der anderen Polarität.

3. Batterie nach Anspruch 1 oder 2,
dadurch gekennzeichnet,
- daß ein an sich bekannter Winkelschraubpol verwendet wird, bei dem die zur Achse des Polschaftes (5) achsparallele Polanschlußbohrung (7) in einem an dem Polschaft befestigten Polquerstück (6) vorhanden ist
- und daß die unterschiedlichen Positionsabstände (A, B) durch eine winkelverdrehte Montage der Winkelschraubpole in den jeweiligen Polnischen des Batteriedeckels gegeben sind.

4. Batterie nach Anspruch 1 oder 2,
dadurch gekennzeichnet,
- daß die unterschiedlichen Positionsabstände durch eine achsversetzte Montage der Polschäfte der Schraubpole in den jeweiligen Polnischen des Batteriedeckels gegeben sind.

5. Batterie nach Anspruch 1 oder 2,
dadurch gekennzeichnet,
- daß die unterschiedlichen Positionsabstände durch eine unterschiedliche Ausbildung der jeweiligen Polnischenwandung des Batteriedeckels gegeben sind.
